# EUROPÄISCHE PATENTSCHRIFT

(11) **EP 3 169 861 B1**
(45) Veröffentlichungstag und Bekanntmachung des Hinweises auf die Patenterteilung: **11.11.2020**
(21) Anmeldenummer: 15744149.4
(22) Anmeldetag: 20.07.2015
(51) Int. Cl.: E05B 81/78, B60Q 3/00, E05B 85/12, E05B 17/10

(54) **TÜRINNENGRIFFSYSTEM FÜR EINE TÜR EINES FAHRZEUGS**
INSIDE DOOR HANDLE SYSTEM FOR A DOOR OF A VEHICLE
SYSTÈME DE POIGNÉE INTÉRIEURE DE PORTIÈRE DE VÉHICULE

(30) Priorität: 18.07.2014 DE 102014110092
(43) Veröffentlichungstag der Anmeldung: 24.05.2017
(73) Patentinhaber: Huf Hülsbeck & Fürst GmbH & Co. KG, 42551 Velbert (DE)
(72) Erfinder: GERDES, Bernd, 45355 Essen (DE); DIEKER, Coen, 7091 VW Dinxperlo (NL)
(74) Vertreter: Bals, Rüdiger
(86) Internationale Anmeldenummer: PCT/EP2015/066587
(87) Internationale Veröffentlichungsnummer: WO 2016/009091

(56) Entgegenhaltungen:
- DE-A1-102009 005 525
- DE-U1- 20 210 610
- DE-U1-202010 006 996
- US-A1- 2003 216 817

## Beschreibung

Die vorliegende Erfindung betrifft ein Türinnengriffsystem für eine Tür eines Fahrzeugs nach dem Oberbegriff von Anspruch 1, und eine Türinnenverkleidung mit einem Türinnengriffsystem nach dem Oberbegriff von Anspruch 14 sowie ein Fahrzeug, insbesondere ein KFZ nach dem Oberbegriff von Anspruch 15 mit zumindest einem derartigen Türinnengriffsystem.

Es ist bekannt, dass Fahrzeuge Türinnengriffsysteme aufweisen, um von innen heraus die Tür zu öffnen. Üblicherweise ist bei Kraftfahrzeugen eine Tür mit einem bewegbaren Hebel als Betätigungselement ausgestattet, wobei durch ein Verschwenken dieses Betätigungselements in Form des Hebels eine mechanische Bewegung eines Schließsystems durchgeführt werden kann. Das Schließsystem kann sich durch das Betätigungselement zwischen einem Sperrzustand und einem Öffnungszustand hin- und herbewegen lassen. Mit anderen Worten kann durch das Betätigungselement, zum Beispiel mithilfe eines Bowdenzuges, ein mechanischer Riegel gelöst werden, so dass aus dem Sperrzustand das Schließsystem in den Öffnungszustand gebracht wird, und anschließend die Tür durch Druck von innen geöffnet werden kann.

Nachteilhaft bei den bekannten Lösungen ist es, dass für schwierige Einsatzsituationen, insbesondere mit einer Gefahr hinsichtlich eines unerwünschten Öffnens der Tür, ein verbleibendes Restrisiko besteht. Ist beispielsweise die Tür eine gegenläufig gegen die Fahrtrichtung öffnende Tür, so muss während der Fahrt mit höchster Sicherheit vermieden werden, dass sich die Tür in unerwünschter Weise öffnet. Hierfür können bisher nur zusätzliche Sicherungsmöglichkeiten eingesetzt werden, welche insbesondere ein komplettes Verriegeln des Fahrzeugs notwendig macht. Dies führt zu erhöhtem Aufwand, um diese notwendige erhöhte Sicherheit zu erreichen. Damit werden zusätzliche Kosten für das Gesamtfahrzeug fällig. Weiterhin ist z.B aus der DE 20 2010 006 996 U1 ein Türinnengriffsystem mit einem Sensorelement, das bei einer Annäherung eines Objekts in seinen Erkennungsbereich ein Erkennungssignal liefert, bekannt.

Ferner stellt auch immer das Öffnen der Hecktüren bei einem Fahrzeug eine zusätzliche Gefahr dar, da gerade die Heckinsassen nicht über Außenspiegel verfügen, in denen sie kontrollieren können, ob Passanten oder Radfahrer in unmittelbarer Nähe vorhanden sind. So stellt das unerwartete Öffnen der Hecktür für vorbeigehende Passanten oder vorbeifahrende Fahrzeuge, insbesondere Radfahrer, immer ein erhöhtes Unfallrisiko dar, welches durch das unbeachtete Öffnen der Hecktüren ausgelöst wird.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Sicherheit bei der Verwendung eines Türinnengriffsystems bei einem Fahrzeug zu erhöhen und den Messbereich des Sensorelementes zu verbessern Voranstehende Aufgabe wird gelöst durch ein Türinnengriffsystem mit den Merkmalen des Anspruchs 1 und einer Türinnenverkleidung mit den Merkmalen des Anspruchs 14 sowie ein Fahrzeug mit den Merkmalen des Anspruchs 15. Weitere Merkmale und Details der Erfindung ergeben sich aus den Unteransprüchen, der Beschreibung und den Zeichnungen. Dabei gelten Merkmale und Details der Erfindung, die im Zusammenhang mit dem erfindungsgemäßen Türinnengriffsystem oder der erfindungsgemäßen Türinnenverkleidung oder dem erfindungsgemäßen Fahrzeug beschrieben sind, selbstverständlich auch im Zusammenhang mit den jeweiligen anderen Teilaspekten der Erfindung, so dass bezüglich der Offenbarung zu den einzelnen Erfindungsaspekten stets wechselseitig Bezug genommen wird bzw. werden kann.

Ein erfindungsgemäßes Türinnengriffsystem für eine Tür eines Fahrzeugs ist dabei ausgebildet für eine Tür, welche ein Schließsystem aufweist, welches in einen Verriegelungszustand und in einen Entriegelungszustand bringbar ist. Hierfür weist das erfindungsgemäße Türinnengriffsystem ein Betätigungselement für die Betätigung des Schließsystems, und zumindest einen mit der Tür und/oder Türinnenverkleidung verbindbaren Träger, an welchem das Betätigungselement angeordnet ist, auf. Weiter ist zumindest ein Sensorelement vorgesehen, das bei einer (fahrzeuginnenseitigen) Annäherung eines Objekts (Annäherung erfolgt von der Fahrzeuginnenseite / Fahrgastraum) in seinen Erkennungsbereich ein Erkennungssignal liefert. Dabei ist für das Schließsystem ein Freigabemodus vorgesehen, bei dem sich das Schließsystem im Entriegelungszustand befindet, bei dem die Betätigung des Betätigungselements eine Öffnungsfunktion der Tür erfolgreich bewirkt. Weiter ist eine Steuereinheit mit dem Schließsystem und dem Sensorelement in Datenkommunikation bringbar, so dass in Abhängigkeit von einem vorhandenen Erkennungssignal und von einem fahrzeugseitigen Freigabesignal die Steuereinheit das Schließsystem in den Freigabemodus überführt bzw. überführen kann. Ein erfindungsgemäßes Türinnengriffsystem zeichnet sich dadurch aus, dass das Betätigungselement innerhalb des Erkennungsbereichs des Sensorelements angeordnet ist, wobei das Sensorelement durch einen Draht gebildet ist, der als Doppelschlaufe zumindest teilweise umlaufend am Träger anordbar ist. Nur zum besseren Verständnis sei an dieser Stelle erwähnt, dass das Sensorelement des erfindungsgemäßen Türinnengriffsystems in der Regel über zumindest ein kapazitives Sensorelement, insbesondere in Form des bereits beschriebenen Drahtes, aufweist, um eine Annäherung eines Objekts in seinen Erkennungsbereich auf kapazitive Art und Weise messen zu können. Damit ist das entsprechende Sensorelement als kapazitiver Näherungssensor ausgestaltet.

Ein erfindungsgemäßes Türinnengriffsystem für eine Tür eines Fahrzeugs baut dementsprechend auf bekannten Türinnengriffsystemen auf. Das Schließsystem ist jedoch in einer zusätzlichen Funktionalität weitergebildet. So kann das Schließsystem neben der einfachen mechanischen Sperrfunktion und der mechanischen Öffnungsfunktion, welche auch bei bekannten Türen zwischen dem Schließen und dem Öffnen der Tür bestehen, nun einen Verriegelungszustand und einen Entriegelungszustand einnehmen. Hierbei handelt es sich mechanisch um eine vergleichbare Zustandssituation, wie beim Verriegeln und Entriegeln des gesamten Fahrzeugs. Jedoch ist das Schließsystem für diese Tür spezifisch, so dass hier für diese Tür und damit spezifisch auch für ein einziges Türinnengriffsystem ein einziger und damit separat schaltbarer Verriegelungszustand bzw. Entriegelungszustand erzeugt werden kann. Das Schließsystem weist zumindest ein mechanisches oder elektromechanisches Schloss auf, um die Tür mechanisch zu verschließen

Das Betätigungselement wird erfindungsgemäß bei einem Türinnengriffsystem für das Betätigen des Schließsystems insbesondere mit Bezug auf ein Umschalten zwischen der Sperrfunktion bzw. dem Sperrzustand und der Öffnungsfunktion bzw. dem Öffnungszustand verwendet. Darunter ist zu verstehen, dass das Betätigungselement bei der Betätigung in bekannter Weise ein Öffnen der Tür durch das mechanische Aufheben der Sperrfunktion ermöglicht.

Erfindungsgemäß ist jedoch nun zusätzlich ein Sensorelement vorhanden, welches die Annäherung eines Objekts, insbesondere durch eine kapazitive Messung, in einen Erkennungsbereich, der insbesondere fahrzeuginnseitig angeordnet ist, zur Verfügung stellt. Diese Erkennung wird als Erkennungssignal ausgegeben, so dass anschließend über eine Datenkommunikation diese Information an eine Steuereinheit weitergeleitet werden kann. Eine solche Steuereinheit kann dabei Teil eines Fahrzeugkommunikationssystems sein. Selbstverständlich kann es auch vorteilhaft sein, wenn ein erfindungsgemäßes Türinnengriffsystem die entsprechende Steuereinheit selbst aufweist, und diese mit dem Schließsystem und dem Sensorelement in Datenkommunikation steht.

Aufgrund der Tatsache, dass nun gemäß dem Kerngedanken der vorliegenden Erfindung das Betätigungselement innerhalb des Erkennungsbereichs des Sensorelementes angeordnet ist, kann eine erhöhte Sicherheit gewährleistet werden. Diese erhöhte Sicherheit wird erreicht, ohne die Bequemlichkeit hinsichtlich der Nutzbarkeit des Betätigungselementes einzuschränken. So führt das Sensorelement dazu, dass bereits vor der tatsächlichen Durchführung der Betätigungsbewegung des Betätigungselementes eine Information über das Erkennungssignal vorliegt, dass mit hoher Wahrscheinlichkeit gleich eine Betätigung durch den Insassen des Fahrzeugs gewünscht wird. Mit anderen Worten dient das Erkennungssignal dazu, die Steuereinheit vorzuwarnen, dass mit hoher Wahrscheinlichkeit gleich eine Öffnungsbewegung des Betätigungselementes durchgeführt wird.

Durch diese Vorwarnfunktion wird es nun möglich, rechtzeitig vor der tatsächlichen Durchführung der Betätigungsbewegung des Betätigungselements ein entsprechendes Vorbereiten des Schließsystems durch ein Umschalten in den Freigabemodus, also einem Umschalten zwischen dem Verriegelungszustand und dem Entriegelungszustand durchzuführen.

Neben der Vorbereitung und der entsprechenden Sicherheitserhöhung kann in der Steuereinheit der Freigabemodus selbstverständlich auch von zwei oder mehr zusätzlichen Eingangssignalen abhängig gemacht werden. Dies erlaubt es, die erfindungsgemäße Sicherheit noch weiter zu erhöhen. So wird insbesondere ein fahrzeugseitiges Freigabesignal abgefragt bzw. als Voraussetzung erwartet, bevor der Freigabemodus für das Schließsystem eingenommen werden kann. Ein solches Freigabesignal kann zum Beispiel ein bereits vorhandenes Fahrzeugsignal sein. So ist es zum Beispiel möglich, dass innerhalb des Fahrzeugs die aktuelle Geschwindigkeit abgefragt wird. Handelt es sich bei dem Türinnengriffsystem zum Beispiel um ein System für eine gegenläufig öffnende Tür, so kann das fahrzeugseitige Freigabesignal eine maximale Vorwärtsgeschwindigkeit beinhalten. Auch kann es vorteilhaft sein, wenn das fahrzeugseitige Freigabesignal ein zwingend stehendes Fahrzeug mit einer Geschwindigkeit von 0 km/h vorsieht. Selbstverständlich sind auch alternativ oder zusätzlich andere Freigabesignale fahrzeugseitig denkbar. Zum Beispiel kann es sich dabei um eine insbesondere kapazitiv bestimmbare Sitzbelegung bezüglich des entsprechenden Sitzplatzes innerhalb des Fahrzeugs in Korrelation zu dem Türinnengriffsystem handeln. Auch eine Gurtinformation, also die Information über das Angeschnalltsein eines dort sitzenden Fahrgastes, kann als fahrzeugseitiges Freigabesignal Verwendung finden. Des Weiteren kann das fahrzeugseitige Freigabesignal auch aus einem Radarsignal oder einem Annäherungssignal von einem kapazitiven Sensor stammen, der die Umgebung außerhalb des Fahrzeugs im Bereich der entsprechenden Tür (des Türinnengriffsystems) überwacht, und somit ein zuverlässiges Warnsignal erzeugt, falls ein Passant, Radfahrer oder ein dicht vorbeifahrendes Fahrzeug im Öffnungsbereich der jeweiligen Tür detektiert wird. Nur wenn die entsprechenden Freigabesignale, z. B. "1", vorliegen, kann durch die Steuereinheit in den Freigabemodus gewechselt werden. Hierfür ist es denkbar, dass alle zusätzlichen Eingangssignale zumindest eine "1" aufweisen, um den Freigabemodus zu erzielen.

Erfindungsgemäß ist es also nun möglich, einerseits die Sicherheit des Türinnengriffsystems gegen ein unerwünschtes und risikobehaftetes Öffnen der Tür zu erhöhen. Gleichzeitig wird diese Sicherheitserhöhung jedoch mit dem bekannten und für den Fahrzeugnutzer gewohnten Komfort der Öffnungsfunktion des Türinnengriffsystems verbunden. Dies wird erfindungsgemäß dadurch erzielt, dass ein Sensorelement eine Annäherung eines Objekts im Wesentlichen von allen Seiten zum Betätigungselement erkennt. Dadurch, dass das Sensorelement mit dem Erkennungsbereich das Betätigungselement im Prinzip vollständig umschließt bzw. das Betätigungselement vorzugsweise vollständig innerhalb des Erkennungsbereichs liegt, wird sichergestellt, dass mit entsprechender Vorwarnzeit vorzugsweise mit 100%iger Sicherheit die Bewegung des Objekts und damit die hohe Wahrscheinlichkeit des Betätigungswunsches erkennbar wird.

Dabei ist darauf hinzuweisen, dass der Erkennungsbereich eines erfindungsgemäß ausgebildeten Sensorelements selbstverständlich unterschiedlichste geometrische Formen aufweisen kann. Insbesondere kann der Erkennungsbereich sowohl zweidimensional, als auch dreidimensional in Form eines Erkennungsvolumens ausgebildet sein. Dabei ist es auch denkbar, dass der Träger eine entsprechende Trägermulde aufweist, in welche ein Nutzer eingreifen kann, um ein bewegbares Betätigungselement zu hintergreifen. Selbstverständlich ist es dabei möglich, dass wie bei einer Lichtschranke das entsprechende Objekt den Erkennungsbereich des Sensorelementes durchschreitet bzw. durchgreift, wenn das Betätigungselement zumindest teilweise hinter diesem Erkennungsbereich angeordnet ist. In einem solchen Fall ist selbstverständlich auch das Volumen hinter dieser Lichtschrankenfunktionalität ein erfindungsgemäßer Teil des Erkennungsbereichs, da eine Anordnung eines Objekts in diesen Bereich hinein zwangsläufig zur Auslösung des zu liefernden Erkennungssignals führt.

Es ist noch hervorzuheben, dass ein Betätigungselement im Sinne der vorliegenden Erfindung nicht zwangsläufig eine mechanische Bewegung durchführen muss. Selbstverständlich ist auch ein elektrisches Öffnen zum Beispiel durch eine Berührungsfunktionalität, durch ein Betätigungselement zurverfügungstellbar. Auch eine Kombination unterschiedlicher Betätigungsfunktionen ist im Sinne der vorliegenden Erfindung denkbar. Die Weiterleitung und die Durchführung innerhalb des Schließsystems kann dabei ebenfalls sowohl mechanisch, als auch rein elektronisch oder durch eine Kombination derselben zur Verfügung gestellt werden.

Es kann von Vorteil sein, wenn bei einem erfindungsgemäßen Türinnengriffsystem das Betätigungselement innerhalb einer Projektionsfläche des Sensorelements, insbesondere mittig, angeordnet ist, wobei insbesondere die Projektionsfläche durch eine im Wesentlichen senkrechte Projektion aus der Richtung des Betätigungselements auf das Sensorelement ausgestaltet ist. Die Projektionsfläche kann dabei insbesondere eine Ebene oder im Wesentlichen eine Ebene aufweisen. Das führt dazu, dass eine besonders kleine und damit leicht und kostengünstig einstellbare bzw. erzeugbare Projektionsfläche eine geringe geometrische Erstreckung des Erkennungsbereichs zur Verfügung stellt. Damit kann eine einfachere, kleinere und vor allem auch kostengünstigere Ausbildung des entsprechenden Sensorelementes zur Verfügung gestellt werden. Die Reduktion des Erkennungsbereichs auf eine entsprechende Projektionsfläche führt darüber hinaus zu einer deutlichen Reduktion unerwünschter Fehlauslösungen. So wird damit sichergestellt, dass eine möglichst direkte Korrelation zwischen dem tatsächlichen Ort des Betätigungselements einerseits und dem Erkennungsbereich andererseits besteht. Dabei bezieht sich der Ort eines bewegbaren Betätigungselements selbstverständlich auf die Position des Betätigungselementes vor der Durchführung des Betätigungsweges für dieses Bauteil.

Erfindungsgemäß ist bei dem Türinnengriffsystem das Sensorelement am Träger angeordnet und/oder vorteilhaft zumindest teilweise im Träger eingebettet. Dies führt zu einer weiteren Integration eines Sensorelements bei einem erfindungsgemäßen Türinnengriffsystem. Damit kann die Komplexität, die notwendigen Bauabmessungen sowie das entsprechende Gewicht weiter reduziert werden. Eine Integration in Form einer Anordnung am Träger führt darüber hinaus dazu, dass keine separate Haltevorrichtung für die Positionsdefinition des Sensorelements mehr notwendig ist. Eine Einbettung am bzw. im Träger ist insbesondere als Einbettung im Material des Trägers zu verstehen. Selbstverständlich ist es dabei denkbar, dass der Träger bereits während seiner Herstellung in Materialeinheit in integraler Weise das Sensorelement aufweist. Dabei kann zum Beispiel mithilfe eines Spritzgussverfahrens das Sensorelement mit eingespritzt werden. Das Sensorelement kann dabei aus einem gleichen oder aus einem unterschiedlichen Material, bezogen auf das Material des Trägers, ausgebildet sein. Auch ein nachträgliches Einbetten, insbesondere von der Rückseite des Trägerelementes her, ist im Sinne der vorliegenden Erfindung denkbar. Dies führt nicht zuletzt neben den mechanischen Vorteilen zu einer Verbesserung hinsichtlich des Schutzes des Sensorelementes, so dass eine mechanische Beeinträchtigung, welche zur Beschädigung oder sogar zum Defekt der Sensorfunktion und damit der Erkennungsfunktionalität führen könnte, mit höherer Wahrscheinlichkeit vermieden wird.

Erfindungsgemäß ist das Sensorelement in Form eines Drahtes ausgebildet welcher umlaufend, insbesondere um eine Trägermulde, am Träger angeordnet ist. Dabei handelt es sich um eine besonders einfache und kostengünstige Ausbildung des Sensorelementes. Insbesondere kann auf diese Weise zum Beispiel eine kapazitive Erkennung für die Sensorfunktion zur Verfügung gestellt werden. Wird ein Draht eingesetzt, so kann eine Befestigung zum Beispiel durch Aufkleben oder durch Aufbringen in Form einer leitenden Schicht, zum Beispiel in Form einer Chromschicht, von hinten am Träger erfolgen. Auch ein Anclipsen durch ein separates Befestigungselement ist im Sinne der vorliegenden Erfindung denkbar. Selbstverständlich kann auch der gesamte Träger bzw. die entsprechende Trägermulde mit einem Sensorelement, insbesondere mit einer flächigen Ausgestaltung, versehen sein. Damit wird eine weitere Sicherheitserhöhung durch eine lückenlosere Überwachung mithilfe eines breiteren Erkennungsbereiches im Sinne der vorliegenden Erfindung denkbar. Darüber hinaus ist grundsätzlich auch eine Nachrüstmöglichkeit gegeben, da zum Beispiel durch ein nachträgliches Verändern des Trägers bzw. ein nachträgliches Anbringen des Sensorelementes die erfindungsgemäßen Vorteile erreicht werden können.

Vorteilhaft ist es darüber hinaus, wenn bei einem erfindungsgemäßen Türinnengriffsystem das Sensorelement als eine elektrisch leitende Beschichtung, insbesondere rückseitig am Träger angeordnet ist. Eine elektrisch leitende Beschichtung kann dabei sowohl aufgeklebt, als auch durch unterschiedlichste Beschichtungsverfahren eingebracht werden. So kann beispielsweise durch einfache und kostengünstige Herstellung das Sensorelement hergestellt werden. Eine elektrisch leitende Beschichtung kann zum Beispiel in galvanischer Weise oder durch Aufdampfen zur Verfügung gestellt sein.

Ein weiterer Vorteil ist es, wenn bei einem erfindungsgemäßen Türinnengriffsystem das Sensorelement über wenigstens ein Befestigungselement am Träger angeordnet ist und/oder das Sensorelement zumindest bereichsweise im Träger eingebettet ist. Ein Befestigungselement dient also dazu, eine mechanische definierte Korrelation zwischen dem Sensorelement und dem Träger herzustellen. Mit anderen Worten dient das Befestigungselement zur kraftschlüssigen Befestigung und Positionierung des Sensorelementes. Dabei wird das Befestigungselement insbesondere auch die Position in eindeutiger Weise definieren, so dass das Befestigungselement mithilfe von Positionshilfsmitteln eine entsprechende exakte Positionierung und Ausrichtung des durch das Sensorelement zur Verfügung gestellten Erkennungsbereichs gewährleistet. Auch hier können die Befestigungselemente sowohl für ein externes Anordnen am Träger als auch für ein entsprechendes Einbetten zur Verfügung gestellt werden. Die Befestigung und damit die Montage kann durch die Verwendung eines Befestigungselementes deutlich vereinfacht und verbessert werden. Gleichzeitig werden Risiken hinsichtlich einer Fehlmontage mit hoher Wahrscheinlichkeit ausgeschlossen.

Um das Sensorelement auf besonders einfache Art und Weise an dem Träger anordnen zu können, kann zumindest ein oder mehrere Befestigungselemente als Clipselemente ausgestaltet sein. Hierbei braucht das Sensorelement nur in die Clipselemente hineingedrückt zu werden, um somit form- und/oder kraftschlüssig am Träger fixiert zu sein. Die Befestigungselemente, die in diesem Fall als Clipselemente ausgestaltet sein können, können stoffschlüssig mit dem Träger verbunden sein und als ein Kunststoffspritzgussteil hergestellt worden sein. Um den mechanischen Aufbau des Trägers möglichst zu vereinfachen, ist es denkbar, dass ein mittiges Clipselement im Wesentlichen T-förmig ausgestaltet ist, und dazu dient, beidseitig den Draht (insbesondere zwei Teilabschnitte) des Sensorelements zu fixieren. Dabei kann das T-förmige Clipselement ausreichend sein, um beide Teilabschnitte des Drahtes mechanisch zu fixieren. Zusätzlich können neben dem mittigen Clipselement zwei weitere, im Wesentlichen L-förmige, Clipselemente vorgesehen sein, die mit dem mittigen Clipselement mechanisch zusammenwirken, um den Draht links- und rechtsseitig vom mittigen Clipselement zu fixieren. Idealerweise sind die einzelnen Clipselemente flexibel ausgestaltet, um den Draht zumindest formschlüssig am Träger zu halten. Zu diesem Zweck ist es sinnvoll, dass die Clipselemente auch über eine Einlaufschräge oder Einlaufkurve verfügen, wodurch der Draht nur auf das Clipselement gepresst werden muss, um damit die Fixierung am Träger zu erreichen. Somit ist eine besonders einfache Montage des Sensorelementes am Träger gewährleistet.

Vorteilhaft ist es ebenfalls, wenn bei einem erfindungsgemäßen Türinnengriffsystem das wenigstens eine Befestigungselement hakenförmig ausgestaltet ist, und das Sensorelement zumindest bereichsweise umklammert. Eine hakenförmige Ausgestaltung ist dahingehend zu verstehen, dass ein teilweises Hintergreifen des Sensorelementes durch das Befestigungselement ausgebildet wird. Dieses bereichsweise Umklammern führt insbesondere zu einer Klemmfunktionalität, welche durch entsprechende Klemmhemmung eine exakte Positionierung und damit eine Fixierung, Befestigung bzw. Sicherung des Sensorelements in der gewünschten definierten Position gewährleistet. Auch hier wird ein weiterer Vorteil hinsichtlich der Einfachheit und der Kostenreduktion für die Montage erzielt.

Vorteilhaft ist es ebenfalls, wenn bei einem erfindungsgemäßen Türinnengriffsystem zumindest ein Signalisierungselement vorgesehen ist, um wenigstens teilweise einen Modus des Schließsystems zu signalisieren, dabei ist insbesondere das Schließsystem, die Steuereinheit und/oder die entsprechende Datenkommunikationsleitung auch ein Teil des Türinnengriffsystems. Ein Signalisierungselement kann dabei insbesondere eine sensorische Ausgabeeinheit aufweisen, welche zum Beispiel als optische Ausgabeeinheit oder als akustische Ausgabeeinheit ausgebildet ist. Eine optische Ausgabeeinheit kann zum Beispiel eine Lichteinheit sein, welche ein Lichtsignal als Signalisierung zur Verfügung stellt. Auch ein Lautsprecher als akustische Ausgabeeinheit kann Teil des Signalisierungselementes sein. So kann beispielsweise beim Annähern eines Objekts an den Erkennungsbereich bzw. beim Eintreten desselben in den Erkennungsbereich, der tatsächliche Modus des Schließsystems angezeigt werden. Befindet sich zum Beispiel das Fahrzeug noch in der Fahrt, liegt kein Freigabemodus für das Schließsystem vor. So kann zum Beispiel durch Anzeigen einer Warnfarbe, insbesondere einer roten Beleuchtung, der Benutzer des Türinnengriffsystems auf diesen Zustand hingewiesen werden. Auch das Erzeugen eines Warntons in akustischer Weise kann zusätzlich oder alternativ durch das Signalisierungselement diesen Sicherheitsvorteil zur Verfügung stellen.

Vorteilhaft ist es weiter, wenn bei einem erfindungsgemäßen Türinnengriffsystem der Träger zumindest einen lichtdurchlässigen Bereich aufweist, wodurch ausgestrahltes Licht vom Signalisierungselement in Form eines Beleuchtungselements zur Vorderseite des Trägers dringt und dort bei einem Lichtaustritt austritt. Mit anderen Worten weist der Träger mithilfe des lichtdurchlässigen Bereichs sozusagen ein Signalisierungsfenster auf, welches für den Lichtaustritt eines entsprechenden Lichtsignals dient. Insbesondere kann dabei ein Farbwechsel die entsprechenden Modusveränderungen darstellen. So kann bei Freigabemodus ein grünes Licht und bei gesperrtem Freigabemodus ein rotes Licht die entsprechende Information an den Benutzer weitergeben. Selbstverständlich kann in ähnlicher Weise auch ein tondurchlässiger Bereich für eine akustische Ausbildung des Signalisierungselementes die gleiche Funktion zur Verfügung stellen. Die unterschiedlichen Signalisierungsfarben bei Lichtausbildung eines Signalisierungselementes können dabei durch entsprechende Lichtleiter, Lichtfilter oder sogar durch unterschiedliche Lichtquellen erzeugt werden.

Ein weiterer Vorteil ist erzielbar, wenn bei einem erfindungsgemäßen Türinnengriffsystem ein weiteres Sensorelement zumindest eine Berührung des Betätigungselements erkennt und ein Berührungssignal liefert. Dadurch ist eine Betätigung des Schließsystems erfolgbar, falls gleichzeitig das fahrzeugseitige Freigabesignal an der Steuereinheit vorliegt. Hierbei handelt es sich also um ein Betätigungselement, welches eine Berührungsfunktion bzw. Touchfunktion zur Verfügung stellt. Es kann dabei insbesondere ein elektronisches oder ein elektromechanisches Schließsystem bzw. Schloss eingesetzt werden, welches in der Lage ist, die Öffnungsfunktion, also die Bewegung entsprechend mechanischer Riegelteile aus einer Schießsituation in eine Öffnungssituation in elektromotorischer Weise durchzuführen. Selbstverständlich kann dies auch mit einem rein mechanischen Schloss im Sinne der vorliegenden Erfindung für ein Türinnengriffsystem kombiniert werden. Mit anderen Worten bietet dieses weitere Sensorelement sozusagen eine zusätzliche Erkennungsstufe zur weiteren Erhöhung und zur Verbesserung des Komforts bei einem erfindungsgemäßen Türinnengriffsystem.

Vorteilhaft ist es darüber hinaus, wenn bei einem erfindungsgemäßen Türinnengriffsystem das Betätigungselement bewegbar mittels eines Lagers am Träger angeordnet ist und die Bewegung des Betätigungselements der Betätigung dient, um die Tür zu öffnen. Dabei handelt es sich im Wesentlichen um die grundsätzliche mechanische Funktionalität des Betätigungselements. Das Lager ist dabei insbesondere als Rotationslager ausgebildet, um eine Rotationsbewegung des Betätigungselements zur Verfügung zu stellen. Eine entsprechende Kopplungseinheit ist vorzugsweise vorgesehen, um eine Bewegung des Betätigungselements mithilfe eines Bowdenzuges oder in anderer mechanischer Weise zur Verfügung zu stellen. Selbstverständlich ist diese Ausführungsform kombinierbar mit einer elektromechanischen Lösung, wie sie im voranstehenden Absatz erläutert worden ist.

Ein weiterer Gegenstand der vorliegenden Erfindung ist ein Fahrzeug, insbesondere KFZ, mit zumindest einem erfindungsgemäßen Türinnengriffsystem. Damit bringt ein erfindungsgemäßes Fahrzeug die gleichen Vorteile mit sich, wie sie ausführlich mit Bezug auf ein erfindungsgemäßes Türinnengriffsystem erläutert worden sind.

Das Fahrzeug bzw. das erfindungsgemäße Türinnengriffsystem kann dabei vorzugsweise eine Steuereinheit und/oder eine entsprechende Beleuchtung aufweisen, so dass vorzugsweise gemeinsame Stecker für die Spannungsversorgung einen sogenannten I-CAN-Netzanschluss oder entsprechende getrennte Stecker zur Verfügung gestellt werden. Die Steuereinheit und/oder das Schließsystem sind dabei vorzugsweise Teil des Fahrzeugs und/oder bereits Teil des Türinnengriffsystems.

Ebenfalls ist es denkbar, dass das Sensorelement durch einen, insbesondere durchgehenden, Draht gebildet ist. Hierdurch lässt sich ein besonders kostengünstiges Sensorelement realisieren. Um die Funktionssicherheit zu erhöhen, ist erfindungsgemäß der Draht des Sensorelements in Form einer Doppelschlaufe angeordnet, worunter zu verstehen ist, dass zwei Teilabschnitte des Drahtes im Wesentlichen parallel zueinander geführt werden, bis zu einer Umlenkstelle, wo quasi der erste Teilabschnitt vom zweiten Teilabschnitt des Drahtes getrennt ist. Diese doppelte Verlegung des Drahtes an einem Bereich des Trägers erhöht den Messbereich des Sensorelements und damit auch direkt den Erkennungsbereich. Ferner ist auch eine Funktionsüberprüfung des Sensorelements sowie eine Steckbelegungsprüfung vom Sensorelement durch eine einfache Widerstandmessung hierdurch möglich.

Um die Messwirkung des Sensorelements zu verbessern, kann am Träger ein elektrisch leitender Kern vorgesehen sein, insbesondere im Bereich des Sensorelements. Dieser elektrisch leitende Kern kann quasi kapazitiv mit dem Sensorelement eingekoppelt sein und kann dadurch den Messbereich und/oder die Messgenauigkeit des Sensorelements erhöhen. Sofern der elektrisch leitende Kern, der am Träger bzw. im Träger eingebettet ist, auf einem anderen elektrischen Potential liegt, als das Sensorelement, kann dieser elektrisch leitende Kern auch als Abschirmung für das Sensorelement verwendet werden. Hierzu kann z. B. der elektrisch leitende Kern auch geerdet sein bzw. auf dem Nullpotential liegen. Ferner kann durch den elektrisch leitenden Kern auch die Stabilität des Trägers verbessert werden, sofern der elektrisch leitende Kern Metall aufweist.

Bei der Verwendung eines Drahtes als Sensorelement ist es zweckmäßig, dass der Draht eine Isolation aufweist, um diesen elektrisch zu isolieren. Idealerweise kann die Isolation PVC aufweisen, was über eine erhöhte Langlebigkeit für elektrische Isolationszwecke verfügt. Darüber hinaus ist auch die Isolation aus PVC flexibel, so dass der entsprechende Draht in beliebiger Form am Träger angebracht und angepasst werden kann.

Des Weiteren ist es von Vorteil, wenn der Draht mehrere Litzen, insbesondere Kupferlitzen, aufweist, wodurch die Flexibilität des Drahtes weiter erhöht wird. Außerdem können unter diesen Litzen auch Zugentlastungslitzen vorhanden sein, die die Zugstabilität des Drahtes weiter erhöhen können.

Zweckmäßigerweise weist der Draht vom Sensorelement einen Anfang und ein Ende auf, die durchgehend durch den Draht selber verbunden sind und einen ersten Teilabschnitt und einen zweiten Teilabschnitt vom Draht bilden können, wobei dazwischen die Umlenkung des Drahtes erfolgt. Die beiden Enden des Drahtes können dann in einem zweipoligen Stecker zur elektrischen Kontaktierung angeordnet sein. Dieser Stecker kann dann direkt mit einer Steuereinheit elektrisch verbunden werden. Somit kann das gesamte Sensorelement sowie die entsprechende Sensorvorrichtung hierzu ausschließlich aus dem Draht mit dem entsprechenden Anschlussstecker bestehen. Der isolierte Draht schützt dabei die Drahtseele vor äußeren Umwelteinflüssen, wie z. B. Spritzwasser, Salz und dergleichen.

Idealerweise kann der Draht vom Sensorelement einen maximalen Querschnitt von 2 mm² aufweisen, wobei der Draht dabei noch flexibel genug ist und auch über die ausreichende Stabilität verfügt, um am Träger angeordnet werden zu können. Außerdem ist auch die elektrische Funktionalität des Sensorelements entsprechend gut. Besonders bevorzugt kann der Draht des Sensorelements auch einen maximalen Querschnitt von kleiner als 1,5 mm² und besonders bevorzugt einen maximalen Querschnitt von gleich oder unter 0,80 mm² aufweisen. Dabei hat es sich herausgestellt, dass die Flexibilität des Drahtes mit abnehmender Querschnittsfläche verbessert wird. Allerdings reduziert sich auch mit abnehmender Querschnittsfläche die mechanische Belastbarkeit des Drahtes. Des Weiteren reduzieren sich auch die Kosten des Drahtes mit abnehmender Querschnittsfläche.

Des Weiteren ist es optional denkbar, dass das Signalisierungselement in einem Gehäuse angeordnet ist, um die elektrischen Leitungen, Schaltungen, Lichtquellen oder dergleichen besonders zuverlässig vor äußeren Umwelteinflüssen zu schützen. Dabei kann das Signalisierungselement über eine Leitung, insbesondere eine Daten- und/oder Energieleitung, mit der Steuereinheit elektrisch verbindbar sein. Somit ist es möglich, dass das Signalisierungselement nicht direkt am Träger, sondern z. B. an einer Türinnenverkleidung angeordnet werden kann. Auch die Montage des Signalisierungselements an der Türinnenverkleidung kann hierdurch vereinfacht werden, da z. B. zunächst das Signalisierungselement an der Türinnenverkleidung angebracht wird und dann über die elektrische Leitung mit dem erfindungsgemäßen Türgriffsystem verbunden wird.

Des Weiteren kann es vorgesehen sein, dass das Signalisierungselement über zumindest eine Lichtquelle verfügt, um somit auch Lichtsignale ausgeben zu können. Hierbei ist es denkbar, dass zumindest eine Lichtquelle genau eine Farbe oder mehrere Farben ausstrahlt. So kann z. B. die Farbe Grün gewählt werden, um bei einer Betätigung des Türinnengriffsystems den Freigabemodus anzuzeigen. Auch können entsprechende Symbole am Gehäuse des Signalisierungselements angeordnet sein, die von den Lichtquellen durchscheinbar sind. Somit kann die intuitive Bedienung des erfindungsgemäßen Türinnengriffsystems durch die beleuchteten Symbole an dem Signalisierungselement verbessert werden.

Des Weiteren ist es erfindungsgemäß vorstellbar, dass die Steuereinheit ebenfalls in einem Gehäuse angeordnet ist, um die vorhandenen elektrischen und elektronischen Bauteile entsprechend gegen äußere Umwelteinflüsse schützen zu können. Ferner ist es denkbar, dass das Gehäuse der Steuereinheit über Halteelemente mit dem Träger, insbesondere reversibel verbindbar ist. Dabei können die Halteelemente auch als Clips- und/oder Rastverbindung ausgestaltet sein, so dass eine werkzeugfreie Montage der Steuereinheit am Träger des Türinnengriffsystems möglich ist. Zusätzlich kann der Träger auch als eine Aufnahme für das Gehäuse der Steuereinheit ausgebildet sein, so dass die Steuereinheit besonders fest und zuverlässig mechanisch mit dem Träger befestigt ist. Hierdurch können Klappergeräusche während der Fahrt zuverlässig verhindert werden.

Bei dem Gehäuse der Steuereinheit ist es denkbar, dass zumindest teilweise elektrische Leitungen, insbesondere zur Kontaktierung mit Steckkontakten, eingespritzt sind. Somit vereinfacht sich die Herstellung der entsprechenden Steuereinheit, da das Gehäuse auch elektrisch leitende Funktionen zwischen den Steckern der Steuereinheit und dem Inneren der Steuereinheit übernimmt. Zweckmäßigerweise sind an dem Gehäuse der Steuereinheit zumindest zwei, idealerweise drei, Steckerbuchsen angeordnet, die teilweise selbst aus dem Gehäuse gebildet sein können. Dabei können die zwei oder drei Steckerbuchsen für einen Stecker des Sensorelements, einen Stecker des Signalisierungselements und einen Strom- und Datenanschlussstecker für die Steuereinheit selbst dienen.

Zweckmäßigerweise weist der Träger selbst Fixierelemente auf, um damit den Träger an einer Türinnenverkleidung und/oder der Tür anordbar zu machen. Diese Fixierelemente können als herausragende Laschen ausgestaltet sein, die jeweils mit einem Durchbruch versehen sind, um hiermit den Träger an einer Türinnenverkleidung oder direkt an der Tür über Nieten, Schrauben oder dergleichen zu fixieren. Zweckmäßigerweise ragen die Fixierelemente umfangmäßig nach außen von dem Träger weg. So entsteht ein großer innerer, freibleibender Bereich, in dem bspw. das Betätigungselement für das Schließsystem anordbar ist. Allerdings ist es auch vorstellbar, dass zumindest einige Fixierelemente auch in den inneren Bereich des Trägers hereinragen, um auch im Inneren eine Befestigung des Trägers zu erzielen. Des Weiteren ist es auch vorstellbar, dass der Träger kein ebenes, sondern ein dreidimensionales Gebilde mit einer gewissen Höhe darstellt. Dabei können die Fixierelemente auch zum Höhenausgleich und zur Befestigung des dreidimensionalen Trägers an der Türinnenverkleidung dienen. Zu diesem Zweck sind stegförmige Bereiche bei den Fixierelementen vorgesehen, die einen Höhenausgleich realisieren.

Des Weiteren sei auch erwähnt, dass die vorliegende Erfindung auch nur auf eine Türinnenverkleidung mit zumindest einem erfindungsgemäßen Türinnengriffsystem gerichtet ist, insbesondere gemäß Anspruch 14. Hierbei ist es denkbar, dass das Türinnengriffsystem insbesondere über den Träger direkt oder indirekt an der Türinnenverkleidung angeordnet werden kann. Zur Fixierung des Trägers am Türinnengriffsystem können die bereits erwähnten Fixierelemente dienen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform eines nicht erfindungsgemäßen Türinnengriffsystems,
- Fig. 2: eine weitere Ausführungsform eines nicht erfindungsgemäßen Türinnengriffsystems,
- Fig. 3a: eine weitere Ausführungsform eines nicht erfindungsgemäßen Türinnengriffsystems,
- Fig. 3b: eine weitere Ausführungsform eines nicht erfindungsgemäßen Türinnengriffsystems,
- Fig. 3c: einen Querschnitt durch einen Draht des Sensorelementes,
- Fig. 4: eine Ausführungsform eines Fahrzeugs,
- Fig. 5: eine Draufsicht auf ein erfindungsgemäßes Türinnengriffsystem,wobei am Träger eine Steuereinheit angeordnet ist,
- Fig. 6: eine dreidimensionale Ansicht auf die Rückseite der Ausführungsform des erfindungsgemäßen Türgriffsystems aus Fig. 5,
- Fig. 7: eine vergleichbare Draufsicht auf die Ausführungsform des erfindungsgemäßen Türinnengriffsystems aus Fig. 5, jedoch ohne Steuereinheit, Signalisierungselement sowie Sensorelement,
- Fig. 8: eine Detailvergrößerung im Bereich der Aufnahme am Träger für die Steuereinheit aus der Ausführungsform aus Fig. 5 und 6,
- Fig. 9: eine weitere Detailansicht auf eine Befestigung des Sensorelements, in Form eines Drahtes, gemäß der Ausführungsform aus den Fig. 5 und 6,
- Fig. 10: eine dreidimensionale Ansicht auf einen Teil eines Gehäuses der Steuereinheit mit eingespritzten Leitungen,
- Fig. 11: eine dreidimensionale Ansicht auf ein Signalisierungselement aus den Fig. 5 und 6 mit zumindest zwei beleuchtbaren Symbolen,
- Fig. 12: eine dreidimensionale Ansicht eines vorgeformten Sensorelements in Form eines Drahtes für die Ausführungsform aus den Fig. 5 und 6 und
- Fig. 13: eine Draufsicht auf einen Bereich der Türinnenverkleidung aus Bedienersicht mit einem Teil des erfindungsgemäßen Türinnengriffsystems.

In den nachfolgenden Figuren werden für die gleichen technischen Merkmale auch von unterschiedlichen Ausführungsformen und -beispielen die identischen Bezugszeichen verwendet.

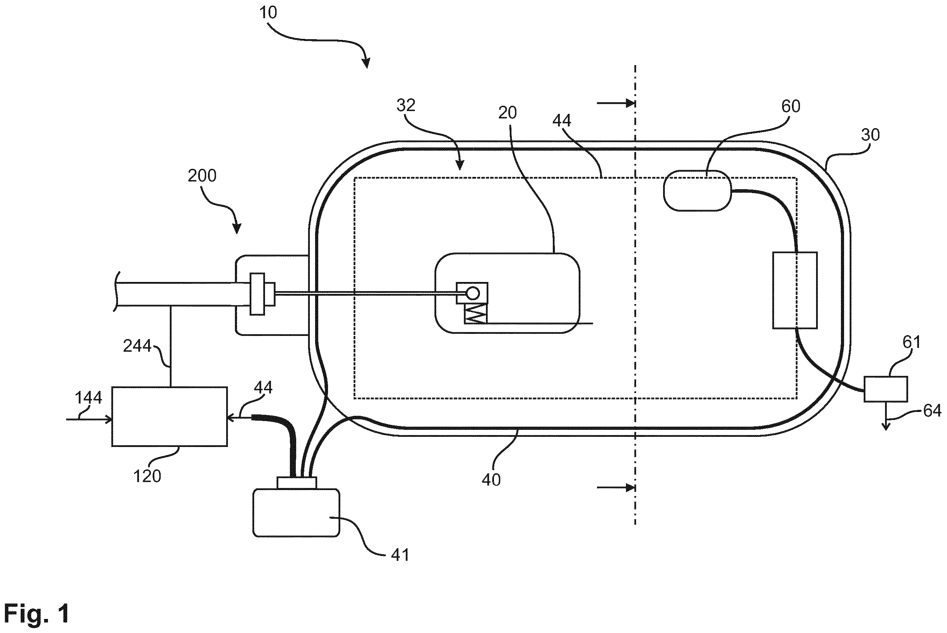

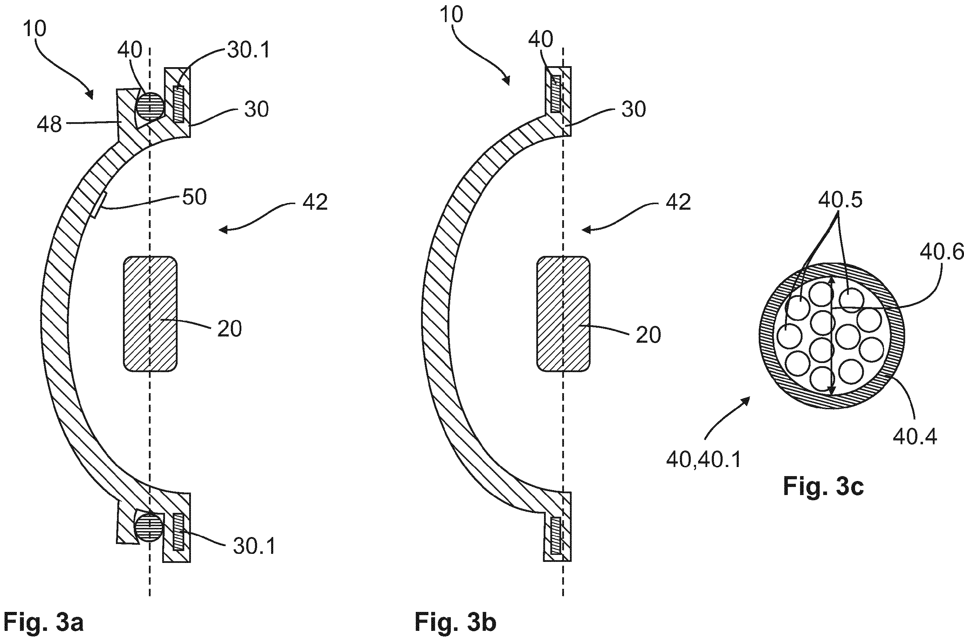

Fig. 1 zeigt schematisch, wie ein erfindungsgemäßes Türinnengriffsystem 10 aufgebaut sein kann. Ein Träger 30 ist hier mit einer Mulde ausgestattet, wie sie später noch mit Bezug auf die Fig. 3a und 3b erläutert wird. Innerhalb dieser Mulde ist ein Betätigungselement 20 angeordnet, welches hier sowohl als rotatorisch bewegbares und damit rotatorisch gelagertes Betätigungselement 20 ausgebildet sein kann, als auch als eine elektrische Sensorfunktion, wie sie noch erläutert wird.

Wünscht ein Benutzer des Türinnengriffsystems 10 die Tür 110 zu öffnen, so wird er sich mit einem Objekt in Form seiner Hand dem Türinnengriffsystem 10 nähern. Diese Näherung, insbesondere in Richtung des Betätigungselements 20, wird durch einen umlaufenden Draht, welcher das Sensorelement 40 zur Verfügung stellt beim Eintreten in den entsprechenden Erkennungsbereich 42 erkennen. Dabei wird ein Erkennungssignal 44 an eine Steuereinheit 120 ausgegeben. Sobald nun das Objekt das tatsächliche Betätigungselement 20 erreicht, wird dies zusätzlich in Form eines Berührungssignals 64 von einem weiteren Sensorelement 60 und der entsprechenden Sensorvorrichtung 61 erkannt und weitergegeben. Die Signale, also das Berührungssignal 64 für eine elektromechanische Öffnungssituation und das Erkennungssignal von der Sensorvorrichtung 41 werden in der Steuereinheit 120 mit einem Freigabesignal 144 von Fahrzeugseite des Fahrzeugs 100 kombiniert, so dass nur bei der Korrelation mit zum Beispiel einem stehenden Fahrzeug, entsprechend anderen Situationen wie einem abgeschnallten Insassen oder einer Belegungsinformation zum benachbarten Sitz, die tatsächliche Freigabe und damit das Steuersignal 244 an das Schließsystem 200 weitergegeben werden kann. Das Schließsystem 200 wird damit in den Freigabemodus bewegt bzw. positioniert, so dass nun im Entriegelungszustand und nicht mehr im Verriegelungszustand über das Betätigungselement 20 die Öffnungsbewegung des gesamten Schließsystems 200 erfolgen kann.

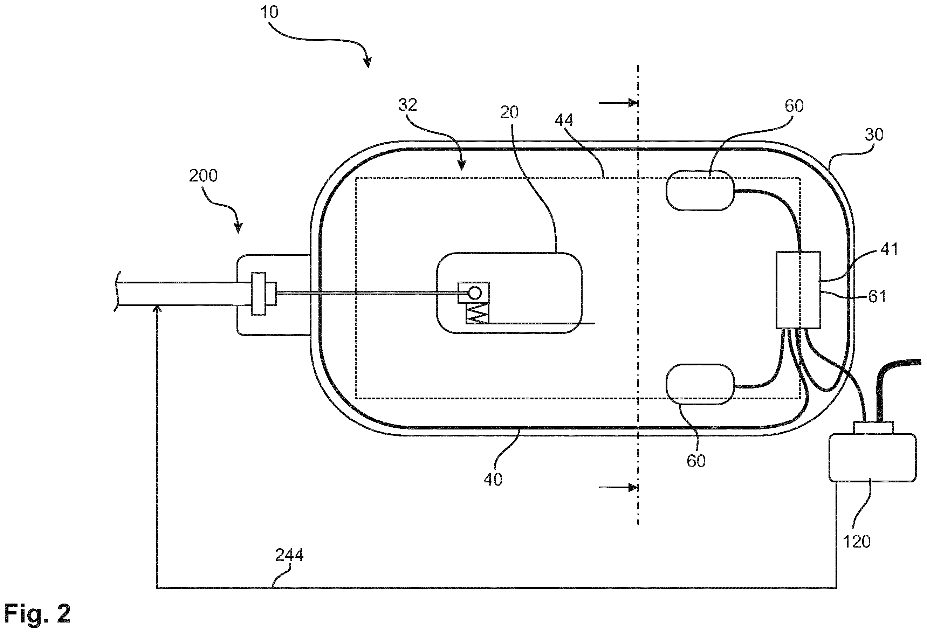

Fig. 2 zeigt eine Korrelation, bei der zwei separate weitere Sensorelemente 60 vorgesehen sind, wobei ansonsten die Korrelation gemäß der Fig. 1 beibehalten wurde. Die Erweiterung der Sensorfunktion durch weitere Sensorelemente 60 führt zu einer weiteren Erhöhung der Gesamtfunktionalität und damit der Sicherheit und des Komforts.

Fig. 3a zeigt eine technische Umsetzung, bei welcher auf der Rückseite des Trägers 30 in einer entsprechenden Mulde ein Draht für das Sensorelement 40 verlegt ist. In der senkrechten Projektionsfläche wird der Erkennungsbereich 42 ausgebildet, so dass das Betätigungselement 20 in hintergreifbarer Weise nun innerhalb des Erkennungsbereichs 42 vorgesehen ist. Gleichzeitig ist ein Signalisierungselement 50 hier als optisches Signalisierungselement 50 vorgesehen, um den Freigabemodus oder einen gesperrten Freigabemodus des Schließsystems in optischer Weise anzuzeigen. Auch ist bei dieser Ausführungsform ein Befestigungselement 48 vorgesehen, welches in hakenförmiger hintergreifender Weise die exakte Befestigung und vor allem die definierte Positionierung des Sensorelementes 40 zur Verfügung stellt.

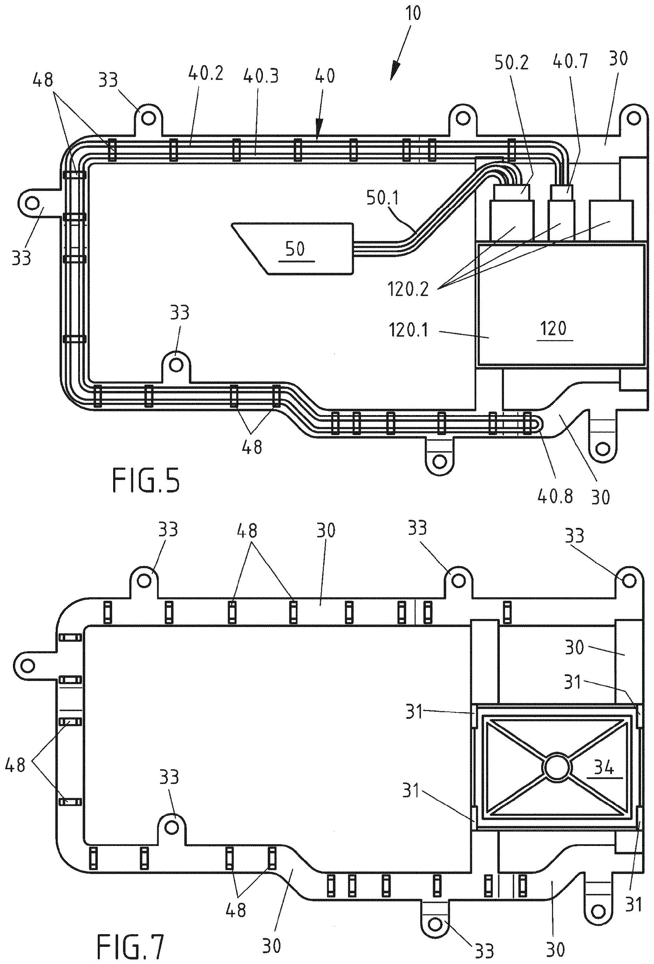

Ebenfalls ist optional in der Fig. 3a ein elektrisch leitender Kern 30.1 im Träger 30 eingezeichnet, der kapazitiv mit dem Sensorelement 40, insbesondere in Form eines Drahtes 40.1 zusammenwirken kann. Dabei kann der elektrisch leitende Kern 30.1 als Abschirmung oder als Verstärkungselement für ein als kapazitiv ausgestaltetes Sensorelement 40 dienen. Zweckmäßigerweise ist der elektrisch leitende Kern 30.1 im Bereich des jeweiligen Sensorelements 40 angeordnet. Ferner kann der Draht 40.1 erfindungsgemäß als Doppelschleife vorgesehen sein, wie es in den Figuren 5 ff. zu erkennen ist.

Fig. 3b basiert auf der Ausführungsform der Fig. 3a, wobei hier in integraler eingebetteter Weise das Sensorelement 40 Teil des Materials des Trägers 30 ist. Dies kann zum Beispiel durch ein entsprechendes Spritzgussverfahren zur Verfügung gestellt werden.

In der Fig. 3c ist ein Querschnitt durch das Sensorelement 40, in Form des Drahtes 40.1 dargestellt. Hierbei ist gut zu erkennen, dass der Draht 40.1 einzelne Litzen 40.5 aufweist, die miteinander verdrillt sein können. Durch den Einsatz von Litzen 40.5 erhöht sich die Flexibilität dieses Drahtes 40.1, wodurch auch die Montage des Sensorelements 40 am Träger 30 besonders vereinfacht wird. Damit ist auch die Umlenkung 40.8 zwischen dem ersten Teilabschnitt 40.2 und dem zweiten Teilabschnitt 40.3 vom Draht 40.1 besonders einfach. Ein maximaler Querschnitt 40.6 vom Draht 40.1 ist ebenfalls in der Fig. 3c dargestellt. Um den Draht 40.1 und damit das Sensorelement 40 besonders vor äußeren Umwelteinflüssen zu schützen, ist eine Isolation 40.4 vorgesehen, die den Draht 40.1 vollständig umhüllt. Nur im Bereich eines Steckers 40.7 sind die Litzen 40.5 vom Draht 40.1 ohne Isolation 40.4 mit den Steckkontakten vom Stecker 40.7 elektrisch leitend verbunden. Zweckmäßigerweise bildet der Stecker 40.7 mit den komplementär ausgestalteten Steckbuchsen 120.2 von der Steuereinheit 120 eine wasserdichte Verbindung.

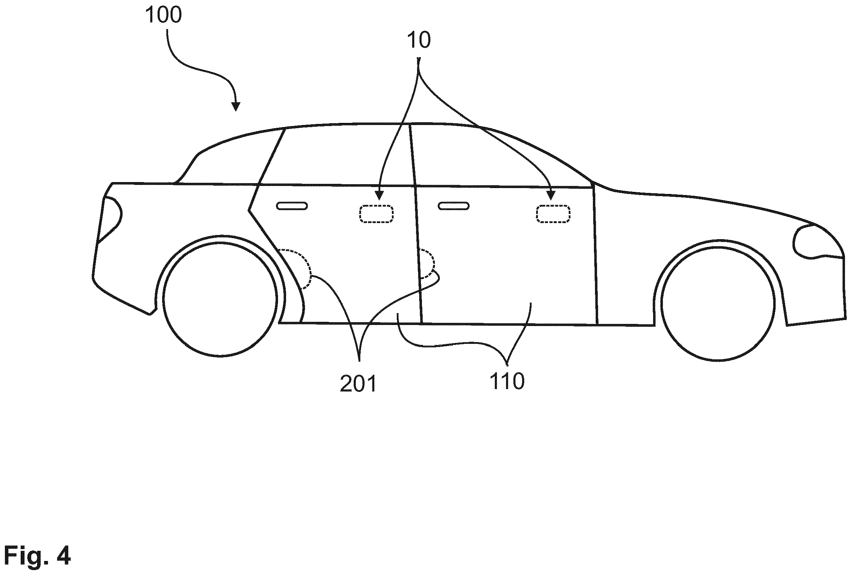

In Fig. 4 ist ein Fahrzeug 100 mit Türen 110 dargestellt, welche jeweils ein Türinnengriffsystem 10 darstellen bzw. aufweisen. Das bedeutet also, dass die erfindungsgemäße Funktionalität für jede einzelne Tür 110 in separater und spezifischer Weise durch die separaten und spezifischen Türinnengriffsysteme 10 zur Verfügung gestellt werden können. An den Außentüren 110 sind einerseits die Türaußengriffe vom Fahrzeug 100 dargestellt, sowie gestrichelt die im Fahrzeuginneren angeordneten Türinnengriffsysteme 10. Diese Türinnengriffsysteme 10 wirken mit den ebenfalls gestrichelt dargestellten Schlössern 201 zusammen, um die Türen 110 am Fahrzeug 100 öffnen und schließen zu können.

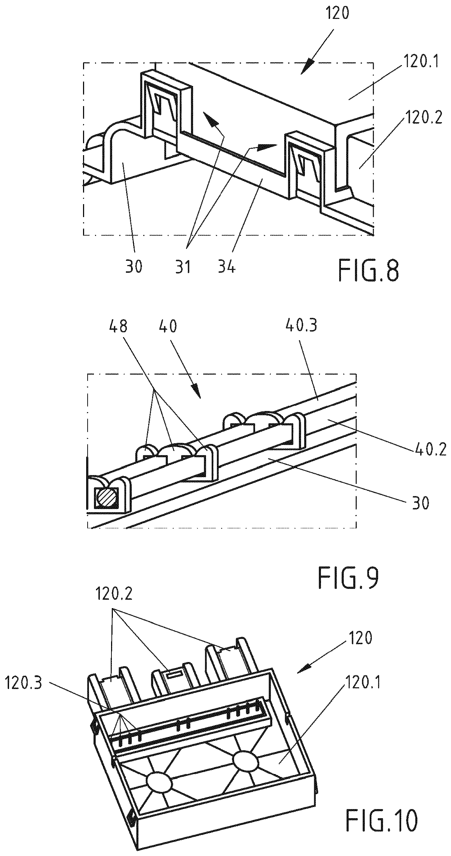

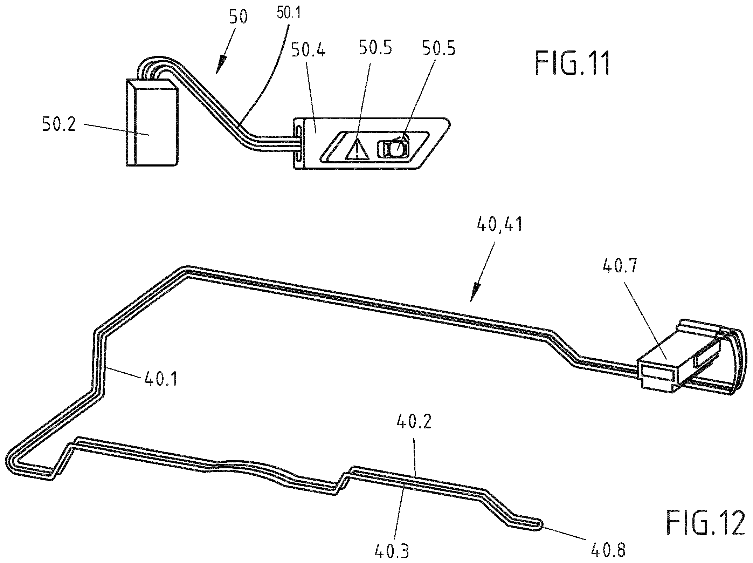

In der Fig. 5 ist eine Ausführungsform des erfindungsgemäßen Türinnengriffsystems 10 dargestellt. Dabei ist das Sensorelement 40 als Doppelschleife in Form eines Drahtes 40.1 ausgestaltet, der einen ersten Teilabschnitt 40.2 und einen zweiten Teilabschnitt 40.3 bildet, die durch die Umlenkung 40.8 voneinander gedanklich (nicht elektrisch oder mechanisch) getrennt sind. Die beiden Enden des Drahtes 40.1 sind mit dem Stecker 40.7 elektrisch leitend verbunden und direkt mit der Steuereinheit 120 in Steckverbindung gebracht. Hierzu weist die Steuereinheit 120 ein Gehäuse 120.1 auf, an dem Steckbuchsen 120.2 für die Stecker 40.7, 50.2 oder dergleichen vorgesehen sind. Das Sensorelement 40 in Form des Drahtes 40.1 ist über die Befestigungselemente 48 am Träger 30 form- und/oder kraftschlüssig befestigt, wobei eine Detailansicht in der Fig. 9 zu erkennen ist. Ebenfalls ist die Befestigung der Steuereinheit 120 in einer Aufnahme 34 vom Träger 30 in der Fig. 8 im Detail gezeigt. Weiterhin ist bei der Ausführungsform aus Fig. 5 ein Signalisierungselement 50 über einen Stecker 50.2 anhand von Leitungen 50.1 elektrisch leitend verbunden. In der Fig. 11 ist ein vollständiges Signalisierungselement 50 dargestellt.

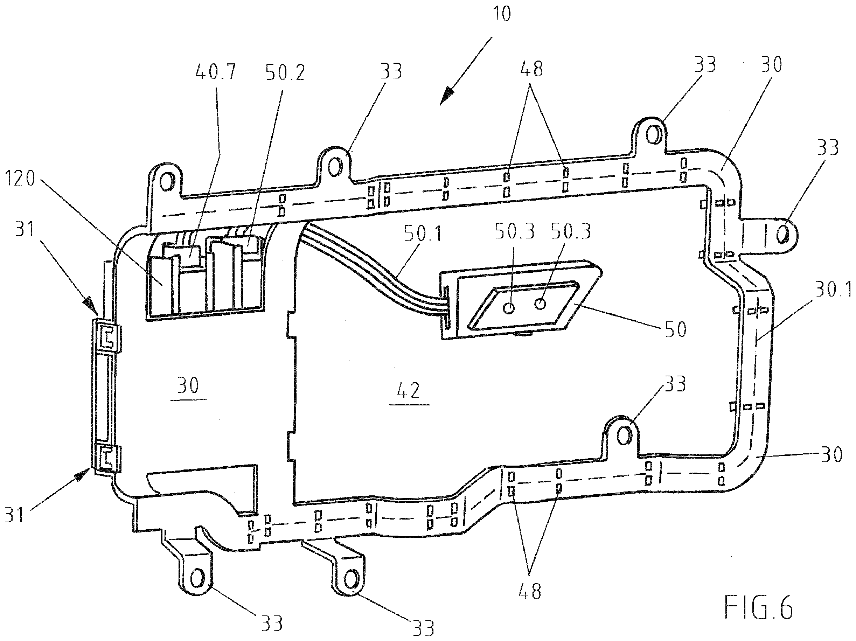

Um den Träger 30 besser erkennen zu können, ist dieser in der Fig. 7 ohne die weiteren Elemente, nämlich die Steuereinheit 120, das Sensorelement 40 sowie das Signalisierungselement 50 dargestellt. Hierbei werden die clipsartigen Befestigungselemente 48 auf dem Träger 30 deutlich sichtbar, die das Sensorelement 40 am Umfang des Trägers 30 fixieren bzw. halten. Zur Befestigung des Trägers 30 sind weiter an diesem Fixierelemente 33 vorgesehen, die laschenartig vom Träger 30 seitlich abstehen. Dabei ragen die meisten Fixierelemente 33 nach außen, um somit einen inneren Freiraum, insbesondere für das Betätigungselement 20 zu erhalten. Allerdings ist es auch vorstellbar, dass einige Fixierelemente auch nach innen ragen, wie z. B. das Fixierelement 33 unten links am Träger 30. Ebenfalls ist in der Fig. 7 auch gut die Aufnahme 34 vom Träger 30 für die Steuereinheit 120 zu erkennen, wobei zusätzlich Halteelemente 31 vorgesehen sind, die insbesondere zur werkzeuglosen Befestigung der Steuereinheit 120, insbesondere über das Gehäuse 120.1 am Träger 30 dienen. Träger 30, Aufnahme 34 und die Halteelemente 31 können durch ein Kunststoffspritzgussteil hergestellt werden.

Wie in der weiteren Fig. 6 zu erkennen ist, stellt der Träger 30 kein ebenes, sondern ein dreidimensionales Gebilde dar, welches über ein Höhenprofil verfügt. Durch diese dreidimensionale Ausgestaltung lässt sich der Träger 30 innenseitig an der Türgriffverkleidung 111 oder der Tür 110 optimal der vorhandenen Form anpassen. Zur Befestigung dienen hierfür die bereit beschriebenen Fixierelemente 33. Wie anhand der Fixierelemente 33 unten links zu erkennen ist, ragen diese teilweise stegförmig heraus und überwinden somit eine Höhe vom übrigen Träger 30, wodurch eine flexible Befestigung des Trägers 30 an der Tür 110 bzw. Türinnenverkleidung 111 möglich ist. In der Fig. 6 ist der erfindungsgemäße Träger 30 von seiner Rückseite, gemeint ist die gegenüberliegende Seite aus der Fig. 5, dargestellt. In dieser Ansicht wird die Steuereinheit 120 mehr oder weniger vollständig vom Träger 30, insbesondere der Aufnahme 34, verdeckt. Deutlich ist bei dem Signalisierungselement 50 zu erkennen, dass dieses über zumindest eine Lichtquelle 50.3 verfügt, wobei im vorliegenden Beispiel zwei Lichtquellen 50.3 vorhanden sind. Diese beiden Lichtquellen 50.3 können jeweils monochromes Licht oder Licht von unterschiedlichen Lichtfarben aussenden. Um das Signalisierungselement 50 flexibel an der Türinnenverkleidung 111 bzw. der Tür 110 anzuordnen, ist das Signalisierungselement 50 über eine Leitung 50.1 mit der Steuereinheit 120 verbunden. Da in dem vorliegenden Ausführungsbeispiel des Türinnengriffsystems 10 das Sensorelement 40 auf der Vorderseite, gemeint ist die sichtbare Seite aus Fig. 5, am Träger 30 angeordnet ist, ist dieses Sensorelement 40 somit auch von der Rückseite aus Fig. 6 nicht erkennbar. Nur sind die einzelnen Befestigungselemente 48 auf der Rückseite vom Träger 30 angedeutet. Ebenfalls ist optional und gestrichelt im Träger 30 ein elektrisch leitender Kern 30.1 angedeutet, der in dem Träger 30 eingebettet oder umspritzt sein kann.

In der Fig. 8 ist eine Detailansicht zur Befestigung der Steuereinheit 120 am Träger 30 dargestellt. Hierbei werden gut die einzelnen Halteelemente 31 sichtbar, die aus einer Clips-/ und/oder Rastverbindung zwischen dem Gehäuse 120.1 der Steuereinheit 120 und den U-förmig herausragenden Bügeln am Trägerelement 30, insbesondere im Bereich der Aufnahme 34 gebildet sind. Eine werkzeugfreie Montage der Steuereinheit 120 erfolgt somit nur durch ein Aufdrücken der Steuereinheit 120 mit dem Gehäuse 120.1 auf den Träger 30 im Bereich der Aufnahme 34. Dabei verrasten automatisch die keilförmigen Herausragungen am Gehäuse 120.1 der Halteelemente 31 hinter den U-förmigen Bügeln vom Träger 30, die die Gegenhalteelemente 31 bilden. Hiermit ist eine form- und/oder kraftschlüssige Befestigung der Steuereinheit 120 am Träger 30 realisiert.

Auch das Sensorelement 40 lässt sich auf ähnliche Art und Weise einfach am Träger 30 befestigen, indem der Draht 40.1 vom Sensorelement 40 nur von oben, gemeint ist senkrecht auf die einzelnen Befestigungselemente 48, aufgedrückt werden muss, siehe Fig. 9. Dabei verrastet der Draht mit seinem jeweiligen ersten Teilabschnitt 40.2 oder zweiten Teilabschnitt 40.3 zumindest formschlüssig am Träger 30. Wie gut in der Fig. 9 zu erkennen ist, ist das mittige Clipselement vom Befestigungselement 48 T-förmig ausgestaltet und ragt mit seinem Kopf aus dem Träger 30 heraus. Links- und rechtsseitig von dem T-förmig ausgestalteten Clipselement sind jeweils zwei (auf dem kopfstehende) L-förmig ausgestaltete Clipselemente vorhanden, wobei die kurzen Enden des L's jeweils zum mittigen T-förmigen Clipselement hin ausgerichtet sind, um somit eine Aufnahme für den jeweiligen Teilabschnitt des Drahtes 40.1 zu bilden. Um die Befestigung der einzelnen Teilabschnitt 40.2, 40.3 vom Draht 40.1 am Träger zu erleichtern, sind Einlaufschrägungen bzw. Einlaufrundungen an der Oberseite der Clipselemente vorgesehen, in denen der Draht 40.1 beim Hineindrücken entlang gleiten kann.

In der Fig. 10 ist ein Teil des Gehäuses 120.1 der Steuereinheit 120 dargestellt. Hierbei ist gut zu erkennen, dass ein Teil der Leitungen 120.3 in das Gehäuse eingespritzt sind, um insbesondere die Steckbuchsen 120.2 mit der inneren Elektronik oder Elektrik im Gehäuse 120.1 elektrisch leitend verbinden zu können. Durch diese Anordnung der elektrischen Leitung 120.3 kann eine besonders wasserdichte und komfortable Ausgestaltung der Steuereinheit 120 realisiert werden, die auch kostengünstig und sehr zuverlässig hergestellt werden kann. Eine Leiterplatte kann zu diesem Zweck auf die offenen Enden der Leitungen 120.3 aufgelötet werden, wodurch eine elektrische Kontaktierung der gesamten Steuereinheit 120 mit den Steuerbuchsen 120.2 herstellbar ist.

In der weiteren Fig. 11 ist das Signalisierungselement 50 mit seinem Gehäuse 50.4, der Leitung 50.1 sowie dem Stecker 50.2 dargestellt, wodurch das Signalisierungselement 50 mit der Steuereinheit 120 elektrisch verbindbar ist. In dem Gehäuse 50.4 kann eine oder mehrere Lichtquellen 50.3 vorgesehen sein, um z. B. die beiden optional dargestellten Symbole 50.5 von innen heraus zu beleuchten. Durch die Verwendung der entsprechenden Lichtquellen 50.3 kann auch eine Farbauswahl des ausgesendeten Lichts stattfinden. So kann z. B. das Warndreieck 50.5 rot beleuchtet sein, wohingegen das Öffnungssymbol 50.5 zum Öffnen der Tür grün dargestellt werden kann. Idealerweise ist die gesamte Elektronik fest in dem Gehäuse 50.4 eingebettet, wozu diese z. B. mit einer Gussmasse ausgespritzt sein kann.

In der Fig. 12 ist das vollständige Sensorelement 40 bzw. die Sensorvorrichtung 41, die im vorliegenden Fall ohne weitere Elektronik auskommt, dargestellt. Dabei weist das Sensorelement 40 im Wesentlichen den Draht 40.1 auf, der als Doppelschlaufe verwendet wird. Wie gut zu erkennen ist, ist die Form des Drahtes 40.1 an dem dreidimensional ausgestalteten Träger 30, insbesondere aus Fig. 6 vorgeformt worden. Die einzelnen Teilabschnitte 40.2 und 40.3 werden durch die Umlenkung 40.8 voneinander gedanklich getrennt. Dieser vorgeformte Draht 40.1 braucht nur auf den Träger 30, insbesondere die Befestigungselemente 48 gedrückt werden, um somit eine formschlüssige und/oder kraftschlüssige Verbindung mit dem Träger 30 herzustellen. Die elektrische Kontaktierung mit der Steuereinheit 120 kann über den Stecker 40.7 erfolgen.

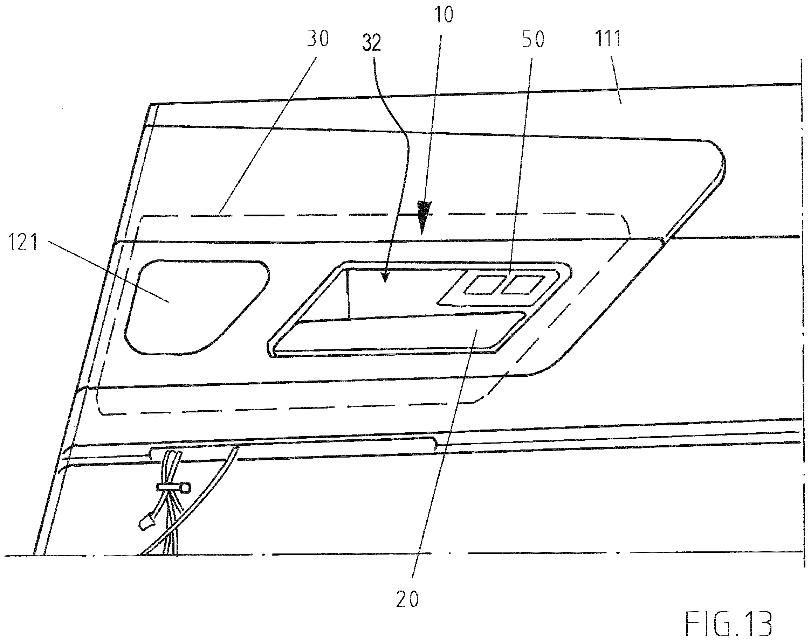

In der Fig. 13 ist eine Draufsicht auf eine Türinnenverkleidung 111 aus Sicht der Fahrgastzelle vom Fahrzeug 100 dargestellt. Dieser Anblick ergibt sich für einen Fahrzeuginsassen, bei der Betätigung des erfindungsgemäßen Türinnengriffsystems 10. Wie gut zu erkennen ist, ist außenseitig nur das Betätigungselement 20 sowie die Eingriffsmulde 32 und das Signalisierungselement 50 mit zwei Symbolen zu erkennen. Gleichzeitig kann das erfindungsgemäße Türinnengriffsystem 10 auch mit einem Lautsprecher 121 verbunden sein, um somit auch einen Warnton und nicht nur ein optisches Warnsignal über das Signalisierungselement 50 für den Bediener auszusenden. Außerdem kann der Lautsprecher 121 auch mit einem Radio, Fahrzeugsystem und/oder einer Stereoanlage verbunden sein. Die Befestigung des erfindungsgemäßen Türinnengriffsystems 10 erfolgt von der Rückseite der Innenverkleidung 111, die selbstverständlich von der Außenseite nicht sichtbar ist. Hierzu dienen die bereits erläuterten Fixierelemente 33.

Die voranstehende Erläuterung der Ausführungsform beschreibt die vorliegende Erfindung ausschließlich im Rahmen von Beispielen. Dabei können selbstverständlich Merkmale der einzelnen Ausführungsformen, sofern technisch sinnvoll, frei miteinander kombiniert werden, ohne den Rahmen der vorliegenden wie in den Ansprüchen definierten Erfindung zu verlassen.

### Bezugszeichenliste

- 10: Türinnengriffsystem
- 20: Betätigungselement
- 30: Träger
- 30.1: elektrisch leitender Kern
- 31: Halteelemente, insbesondere für 120
- 32: Trägermulde
- 33: Fixierelement, insbesondere für 111
- 34: Aufnahme für 120
- 40: Sensorelement
- 40.1: Draht von 40
- 40.2: erster Teilabschnitt von 40.1
- 40.3: zweiter Teilabschnitt von 40.1
- 40.4: Isolation
- 40.5: Litzen
- 40.6: Querschnitt
- 40.7: Stecker für 120
- 40.8: Umlenkung
- 41: Sensorvorrichtung
- 42: Erkennungsbereich
- 44: Erkennungssignal
- 48: Befestigungselement
- 50: Signalisierungselement
- 50.1: Leitung
- 50.2: Stecker für 120
- 50.3: Lichtquelle
- 50.4: Gehäuse
- 50.5: Symbol, insbesondere leuchtend
- 60: Sensorelement
- 61: Sensorvorrichtung
- 64: Berührungssignal
- 100: Fahrzeug
- 110: Tür
- 111: Türinnenverkleidung
- 120: Steuereinheit
- 120.1: Gehäuse
- 120.2: Steckerbuchse von 120
- 120.3: Leitung
- 121: Lautsprecher
- 144: Freigabesignal

- 200: Schließsystem
- 201: mechanisches oder elektromechanisches Schloss
- 244: Steuersignal

## Patentansprüche

1. Türinnengriffsystem (10) für eine Tür (110) eines Fahrzeugs (100), wobei die Tür (110) durch ein Schließsystem (200) in einen Verriegelungszustand und in einen Entriegelungszustand bringbar ist, aufweisend
ein Betätigungselement (20) für die Betätigung des Schließsystems (200), und zumindest einen mit der Tür (110) verbindbaren Träger (30), an welchem das Betätigungselement (20) angeordnet ist, und weiter aufweisend
zumindest ein Sensorelement (40), das bei einer Annäherung eines Objekts in seinen Erkennungsbereich (42) ein Erkennungssignal (44) liefert, wobei ein Freigabemodus für das Schließsystem (200) vorgesehen ist, bei dem sich das Schließsystem (200) im Entriegelungszustand befindet, bei dem die Betätigung des Betätigungselements (20) eine Öffnungsfunktion der Tür (110) erfolgreich bewirkt, wobei eine Steuereinheit (120) mit dem Schließsystem (200) und dem Sensorelement (40) in Datenkommunikation bringbar ist, wobei in Abhängigkeit von einem vorhandenen Erkennungssignal (44) und von einem fahrzeugseitigen Freigabesignal (144) die Steuereinheit (120) das Schließsystem (200) in den Freigabemodus überführt, **dadurch gekennzeichnet,**
**dass** das Betätigungselement (20) innerhalb des Erkennungsbereichs (42) des Sensorelements (40) angeordnet ist, wobei das Sensorelement (40) durch einen Draht (40.1) gebildet ist, der als Doppelschlaufe (40.2, 40,3) zumindest teilweise umlaufend am Träger (30) anordbar ist.

2. Türinnengriffsystem (10) nach Anspruch 1,
**dadurch gekennzeichnet,**
**dass** das Betätigungselement (20) innerhalb einer Projektionsfläche des Sensorelementes (40), insbesondere mittig, angeordnet ist, wobei insbesondere die Projektionsfläche durch eine im Wesentlichen senkrechte Projektion aus der Richtung des Betätigungselements (20) auf das Sensorelement (40) ausgestaltet ist und/oder dass das Sensorelement (40) am Träger (30) angeordnet ist und/oder zumindest teilweise im Träger (30) eingebettet ist.

3. Türinnengriffsystem (10) nach einem der vorhergehenden Ansprüche,
**dadurch gekennzeichnet,**
**dass** das Sensorelement (40) zumindest eine Leiterbahn, insbesondere in Form eines Drahtes oder einer Folie, aufweist, welche umlaufend, insbesondere um eine Trägermulde (32), am Träger (30) angeordnet ist.

4. Türinnengriffsystem (10) nach einem der vorhergehenden Ansprüche,
**dadurch gekennzeichnet,**
**dass** es sich bei dem Draht (40.1) um einen durchgehenden Draht (40.1) handelt und/oder dass der Draht (40.1) vom Sensorelement (40) durch eine Isolation (40.4) elektrisch isoliert ist und/oder dass der Draht (40.1) vom Sensorelement (40) mehrere Litzen (40.5), insbesondere Kupferlitzen, aufweist
und/oder dass der Draht (40.1) vom Sensorelement (40) einen maximalen Querschnitt (40.6) von 2,00 mm² aufweist, vorzugsweise einen maximalen Querschnitt (40.6) von 1,50 mm² und besonders bevorzugt einen maximalen Querschnitt (40.6) von 0,80 mm².

5. Türinnengriffsystem (10) nach einem der vorhergehenden Ansprüche,
**dadurch gekennzeichnet,**
**dass** das Sensorelement (40) als eine elektrisch leitende Beschichtung, insbesondere rückseitig am Träger (30) angeordnet ist.

6. Türinnengriffsystem (10) nach einem der vorhergehenden Ansprüche,
**dadurch gekennzeichnet,**
**dass** das Sensorelement (40) über wenigstens ein Befestigungselement (48) am Träger (30) angeordnet ist und/oder das Sensorelement (40) zumindest bereichsweise im Träger (30) eingebettet ist
und/oder dass das wenigstens eine Befestigungselement (48) für das Sensorelement (40) als Clipselement ausgestaltet ist, wobei insbesondere ein Clipselement derart ausgestaltet ist, um zwei Drahtabschnitte (40.2, 40,3) gleichzeitig zu fixieren
und/oder dass das wenigstens eine Befestigungselement (48) hakenförmig ausgestaltet ist, und das Sensorelement (40) zumindest bereichsweise umklammert.

7. Türinnengriffsystem (10) nach einem der vorhergehenden Ansprüche,
**dadurch gekennzeichnet,**
**dass** zumindest ein Signalisierungselement (50) vorgesehen ist, um wenigstens teilweise einen Modus des Schließsystems (200) zu signalisieren.

8. Türinnengriffsystem (10) nach einem der vorhergehenden Ansprüche,
**dadurch gekennzeichnet,**
**dass** das Signalisierungselement (50) in einem Gehäuse (50.4) angeordnet ist, und insbesondere über eine Leitung (50.1) mit der Steuereinheit (120) elektrisch verbindbar ist, und/oder
**dass** das Signalisierungselement (50) zumindest eine Lichtquelle (50.3) aufweist, wobei insbesondere die Lichtquelle (50.3) genau eine Farbe oder mehrere Farben ausstrahlt.

9. Türinnengriffsystem (10) nach einem der vorhergehenden Ansprüche,
**dadurch gekennzeichnet,**
**dass** die Steuereinheit (120) in einem Gehäuse (120.1) angeordnet ist, wobei das Gehäuse (120.1) über Halteelemente (31) mit dem Träger (30) insbesondere reversibel verbindbar ist
und/oder dass in dem Gehäuse (120.1) der Steuereinheit (120) zumindest teilweise elektrische Leitungen (120.3), insbesondere zur Kontaktierung mit Steckkontakten, eingespritzt sind.

10. Türinnengriffsystem (10) nach einem der vorhergehenden Ansprüche,
**dadurch gekennzeichnet,**
**dass** am Träger (30) Fixierelemente (33) angeordnet sind, womit der Träger (30) an einer Türinnenverkleidung (111) anordbar ist
und/oder dass am oder im Träger (30) ein elektrisch leitender Kern (30.1) vorgesehen ist, insbesondere im Bereich des Sensorelementes (40).

11. Türinnengriffsystem (10) nach einem der vorhergehenden Ansprüche,
**dadurch gekennzeichnet,**
**dass** der Träger (30) zumindest einen lichtdurchlässigen Bereich aufweist, wodurch ausgestrahltes Licht vom Signalisierungselement (50) in Form eines Beleuchtungselements zur Vorderseite des Trägers (30) dringt und dort bei einem Lichtausstritt austritt.

12. Türinnengriffsystem (10) nach einem der vorhergehenden Ansprüche,
**dadurch gekennzeichnet,**
**dass** ein weiteres Sensorelement (60) zumindest eine Berührung des Betätigungselements (20) erkennt und ein Berührungssignal (64) liefert, wodurch eine Betätigung des Schließsystems (200) erfolgbar ist, falls gleichzeitig das fahrzeugseitige Freigabesignal (144) an der Steuereinheit (120) vorliegt.

13. Türinnengriffsystem (10) nach einem der vorhergehenden Ansprüche,
**dadurch gekennzeichnet,**
**dass** das Betätigungselement (20) bewegbar mittels eines Lagers am Träger (30) angeordnet ist und die Bewegung des Betätigungselements (20) der Betätigung dient, um die Tür zu öffnen.

14. Türinnenverkleidung (111) mit zumindest einem Türinnengriffsystem (10), aufweisend die Merkmale nach einem der vorhergehenden Ansprüche,
wobei insbesondere der Träger (30) direkt oder indirekt an der Türinnenverkleidung (111) angeordnet ist.

15. Fahrzeug (100), insbesondere KFZ, mit zumindest einem Türinnengriffsystem (10), aufweisend die Merkmale nach einem der vorhergehenden Ansprüche.

## Claims

1. Inside door handle system (10) for a door (110) of a vehicle (100), wherein the door (110) can be brought into a locking state and into an unlocking state by a locking system (200), comprising:
an actuating element (20) for actuating the locking system (200), and
at least one carrier (30) connectable to the door (110), on which the actuating element (20) is arranged, and further comprising:
at least one sensor element (40) which supplies a detection signal (44) when an object approaches its detection region (42), wherein
a release mode is provided for the locking system (200), in which the locking system (200) is in the unlocking state, in which the actuation of the actuating element (20) successfully effects an opening function of the door (110), wherein a control unit (120) can be brought into data communication with the locking system (200) and the sensor element (40), wherein the control unit (120) converts the locking system (200) into the release mode depending on an existing detection signal (44) and a vehicle-side release signal (144),
**characterized in that**
the actuating element (20) is arranged within the detection region (42) of the sensor element (40), wherein the sensor element (40) is formed by a wire (40.1) which can be arranged as a double loop (40.2, 40.3) at least partially circumferentially on the carrier (30).

2. Inside door handle system (10) according to claim 1,
**characterized in that**
the actuating element (20) is arranged within a projection surface of the sensor element (40), in particular centrally, wherein in particular the projection surface is designed by a substantially perpendicular projection from the direction of the actuating element (20) onto the sensor element (40)
and/or the sensor element (40) is arranged on the carrier (30) and/or is at least partially embedded in the carrier (30).

3. Inside door handle system (10) according to one of the previous claims,
**characterized in that**
the sensor element (40) comprises at least one conductor track, in particular in the form of a wire or a film, which is arranged circumferentially, in particular around a carrier trough (32), on the carrier (30).

4. Inside door handle system (10) according to one of the previous claims,
**characterized in that**
the wire (40.1) is a continuous wire (40.1)
and/or the wire (40.1) is electrically insulated from the sensor element (40) by an insulation (40.4) and/or the wire (40.1) from the sensor element (40) comprises several braids (40.5), in particular copper braids,
and/or the wire (40.1) from the sensor element (40) comprises a maximum cross-section (40.6) of 2.00 mm², preferably a maximum cross-section (40.6) of 1.50 mm² and particularly preferably a maximum cross-section (40.6) of 0.80 mm².

5. Inside door handle system (10) according to one of the previous claims,
**characterized in that**
the sensor element (40) is arranged as an electrically conductive coating, in particular on the rear side of the carrier (30).

6. Inside door handle system (10) according to one of the previous claims,
**characterized in that**
the sensor element (40) is arranged on the carrier (30) via at least one fixing element (48) and/or the sensor element (40) is embedded at least partially in the carrier (30) and/or the at least one fixing element (48) for the sensor element (40) is designed as a clip element, wherein one clip element in particular is designed to fixate two wire sections (40.2, 40.3) simultaneously
and/or the at least one fixing element (48) is designed in the form of a hook and clasps the sensor element (40) at least partially.

7. Inside door handle system (10) according to one of the previous claims,
**characterized in that**
at least one signaling element (50) is provided to at least partially signal a mode of the locking system (200).

8. Inside door handle system (10) according to one of the previous claims,
**characterized in that**
the signaling element (50) is arranged in a housing (50.4) and, in particular, can be electrically connected to the control unit (120) via a line (50.1), and/or
the signaling element (50) comprises at least one light source (50.3), wherein in particular the light source (50.3) emits exactly one color or several colors.

9. Inside door handle system (10) according to one of the previous claims,
**characterized in that**
the control unit (120) is arranged in a housing (120.1), wherein the housing (120.1) can be connected, in particular reversibly, to the carrier (30) via holding elements (31) and/or electrical lines (120.3), in particular for contacting with plug contacts, are at least partially injected in the housing (120.1) of the control unit (120).

10. Inside door handle system (10) according to one of the previous claims,
**characterized in that**
fixing elements (33) are arranged on the carrier (30), by means of which the carrier (30) can be arranged on an inner door panel (111)
and/or an electrically conductive core (30.1) is provided on or in the carrier (30), in particular in the region of the sensor element (40).

11. Inside door handle system (10) according to one of the previous claims,
**characterized in that**
the carrier (30) comprises at least one light-transmitting region, as a result of which emitted light from the signaling element (50) penetrates in the form of an illumination element to the front side of the carrier (30) and emerges there at a light emission.

12. Inside door handle system (10) according to one of the previous claims,
**characterized in that**
a further sensor element (60) detects at least one touch of the actuating element (20) and supplies a touch signal (64), as a result of which the closing system (200) can be actuated if the vehicle-side release signal (144) is simultaneously present at the control unit (120).

13. Inside door handle system (10) according to one of the previous claims,
**characterized in that**
the actuating element (20) is arranged movably by means of a bearing on the carrier (30) and the movement of the actuating element (20) serves for actuation in order to open the door.

14. inner door panel (111) with at least one inside door handle system (10) comprising the features according to one of the previous claims,
wherein in particular the carrier (30) is arranged directly or indirectly on the inner door panel (111).

15. Vehicle (100), in particular a motor vehicle, with at least one inside door handle system (10) comprising the features according to one of the previous claims.

## Revendications

1. Système de poignée intérieure de porte (10) pour une porte (110) d'un véhicule (100), dans lequel la porte (110) peut être amenée dans un état de verrouillage et dans un état de déverrouillage par un système de fermeture (200), comprenant:
un élément d'actionnement (20) pour actionner le système de fermeture (200), et
au moins un support (30) pouvant être relié à la porte (110), sur lequel est disposé l'élément d'actionnement (20), et comprenant en outre:
au moins un élément capteur (40) qui fournit un signal de détection (44) lorsqu'un objet s'approche de sa zone de détection (42), dans lequel
un mode de déverrouillage est prévu pour le système de fermeture (200), dans lequel le système de fermeture (200) est à l'état de déverrouillage, dans lequel l'actionnement de l'élément d'actionnement (20) effectue avec succès une fonction d'ouverture de la porte (110), une unité de commande (120) peut être mise en communication de données avec le système de fermeture (200) et l'élément capteur (40), l'unité de commande (120) convertissant le système de fermeture (200) en mode de déverrouillage en fonction d'un signal de détection (44) existant et d'un signal de déverrouillage (144) du côté du véhicule, **caractérisé en ce que**
l'élément d'actionnement (20) est disposé à l'intérieur de la zone de détection (42) de l' élément capteur (40), l'élément capteur (40) étant formé par un fil (40.1) qui peut être disposé sous la forme d'une double boucle (40.2, 40.3) sur le support (30) au moins partiellement sur la circonférence.

2. Système de poignée intérieure de porte (10) selon la revendication 1,
**caractérisé en ce que**
l'élément d'actionnement (20) est disposé à l'intérieur d'une surface de projection de l'élément capteur (40), en particulier au centre, la surface de projection étant en particulier formée par une projection sensiblement perpendiculaire de la direction de l'élément d'actionnement (20) sur l'élément capteur (40)
et/ou l'élément capteur (40) est disposé sur le support (30) et/ou est au moins partiellement encastré dans le support (30).

3. Système de poignée intérieure de porte (10) selon l'une des revendications précédentes,
**caractérisé en ce que**
l'élément capteur (40) présente au moins une piste conductrice, en particulier sous la forme d'un fil ou d'un film, qui est disposée sur le support (30) de manière circonférentielle, en particulier autour d'une benne de support (32).

4. Système de poignée intérieure de porte (10) selon l'une des revendications précédentes,
**caractérisé en ce que**
le fil (40.1) est un fil continu (40.1)
et/ou le fil (40.1) est électriquement isolé de l'élément capteur (40) par une isolation (40.4) et/ou le fil (40.1) de l'élément capteur (40) comprend plusieurs cordons (40.5), en particulier des cordons de cuivre,
et/ou le fil (40.1) de l'élément capteur (40) a une section transversale maximale (40.6) de 2,00 mm², de préférence une section transversale maximale (40.6) de 1,50 mm² et de manière particulièrement préférée une section transversale maximale (40.6) de 0,80 mm².

5. Système de poignée intérieure de porte (10) selon l'une des revendications précédentes,
**caractérisé en ce que**
l'élément capteur (40) est disposé sous la forme d'une enduction électriquement conducteur, en particulier sur la face arrière du support (30).

6. Système de poignée intérieure de porte (10) selon l'une des revendications précédentes,
**caractérisé en ce que**
l'élément capteur (40) est disposé sur le support (30) par l'intermédiaire d'au moins un élément de fixation (48) et/ou l'élément capteur (40) est au moins partiellement encastré dans le support (30)
et/ou l'au moins un élément de fixation (48) pour l'élément capteur (40) est conçu comme un élément à clip, un élément à clip en particulier étant conçu pour fixer deux sections de fil (40.2, 40.3) simultanément
et/ou l'au moins un élément de fixation (48) est conçu sous la forme d'un crochet et enserrent l'élément capteur (40) au moins partiellement.

7. Système de poignée intérieure de porte (10) selon l'une des revendications précédentes,
**caractérisé en ce qu'**
au moins un élément de signalisation (50) est prévu pour signaler au moins partiellement un mode du système de fermeture (200).

8. Système de poignée intérieure de porte (10) selon l'une des revendications précédentes,
**caractérisé en ce que**
l'élément de signalisation (50) est disposé dans un boîtier (50.4) et peut être relié électriquement, en particulier par une ligne (50.1), à l'unité de commande (120), et/ou l'élément de signalisation (50) comprend au moins une source lumineuse (50.3), la source lumineuse (50.3) en particulier émettant exactement une couleur ou plusieurs couleurs.

9. Système de poignée intérieure de porte (10) selon l'une des revendications précédentes,
**caractérisé en ce que**
l'unité de commande (120) est disposée dans un boîtier (120.1), le boîtier (120.1) pouvant être relié, en particulier de manière réversible, au support (30) par l'intermédiaire d'éléments de retenue (31)
et/ou des lignes électriques (120.3), en particulier pour le contact avec des contacts à fiches, sont au moins partiellement injectées dans le boîtier (120.1) de l'unité de commande (120).

10. Système de poignée intérieure de porte (10) selon l'une des revendications précédentes,
**caractérisé en ce que**
des éléments de fixation (33) sont disposés sur le support (30), au moyen desquels le support (30) peut être disposé sur un revêtement intérieur de porte (111) et/ou un noyau électriquement conducteur (30.1) est prévu sur ou dans le support (30), en particulier dans la zone de l'élément capteur (40).

11. Système de poignée intérieure de porte (10) selon l'une des revendications précédentes,
**caractérisé en ce que**
le support (30) présente au moins une zone de transmission de la lumière, grâce à quoi la lumière émise par l'élément de signalisation (50) sous forme d'élément d'éclairage pénètre dans la face avant du support (30) et y sort lorsque la lumière en sort.

12. Système de poignée intérieure de porte (10) selon l'une des revendications précédentes,
**caractérisé en ce qu'**
un autre élément capteur (60) détecte au moins un contact de l'élément d'actionnement (20) et fournit un signal de contact (64), grâce auquel le système de fermeture (200) peut être actionné si le signal de déverrouillage (144) au côté véhicule est simultanément présent sur l'unité de commande (120).

13. Système de poignée intérieure de porte (10) selon l'une des revendications précédentes,
**caractérisé en ce que**
l'élément d'actionnement (20) est disposé sur le support (30) de manière à pouvoir être déplacé au moyen d'un palier, et le mouvement de l'élément d'actionnement (20) sert à actionner la porte afin d'ouvrir la porte.

14. Revêtement intérieur de porte (111) avec au moins un système de poignée intérieure de porte (10), ayant les caractéristiques selon l'une des revendications précédentes,
dans lequel en particulier le support (30) est disposé directement ou indirectement sur le revêtement intérieur de la porte (111).

15. Véhicule (100), en particulier véhicule automobile, avec au moins un système de poignée intérieure de porte (10), présentant les caractéristiques selon l'une des revendications précédentes.
